(19) **Europäisches Patentamt**

**European Patent Office**

**Office européen des brevets**

(11) Veröffentlichungsnummer: **0 259 506**

**A1**

(12) # EUROPÄISCHE PATENTANMELDUNG

(21) Anmeldenummer: **86112368.5**

(51) Int. Cl.⁴: **A01K 51/00 , A01K 55/00**

(22) Anmeldetag: **06.09.86**

(43) Veröffentlichungstag der Anmeldung:
**16.03.88 Patentblatt 88/11**

(84) Benannte Vertragsstaaten:
**AT BE CH FR GB IT LI LU NL SE**

(71) Anmelder: **Buschack, Wilhelm**
**Pfarrstrasse 7**
**D-8800 Ansbach(DE)**

(72) Erfinder: **Buschack, Wilhelm**
**Pfarrstrasse 7**
**D-8800 Ansbach(DE)**

(54) **Behandlungsgerät für Bienenkrankheiten.**

(57) Das nach den Oberbegriff erfindungsgemäße Behandlungsgerät für Bienenkrankheiten kann zum Abglimmen von Räucherstreifen (20), mit oder ohne Umluft (16) eingesetzt werden.

Durch den Einsatz des Lufterwärmers (2) mit Verdampfungstopf wird die Bienentraube aufgelockert, wodurch eine intensive Behandlung erst ermöglicht wird.

In der Anwendung hat der Imker die Möglichkeit nach seiner Betriebsweise, seiner Erkenntnis und seinen Hilfsmitteln, die Behandlung durchzuführen.

Eine Behandlung in der Latenzzeit ist daher ermöglicht.

*Fig. 1*

## Behandlungsgerät für Bienenkrankheiten

VERWENDUNG:

Für die Behandlung von Bienenkrankheiten. Erhöhen der Stocktemperatur mit Schocktherapie.

Aufgabe:

Das Behandlungsgerät hat die Aufgabe, Behandlungsmittel mit geringen Arbeitsaufwand und ohne öffnen des Bienenstockes, durch das Flugloch oder eine Behandlungsöffnung, dem Bienenvolk zuzuführen.

LÖSUNG DER AUFGABE:

Es wurde nach dem Oberbegriff ein Gerät entwickelt, welches in einfacher Handhabung mit Kalt- oder Warmanwendung, in einem dafür geschaffenen Umluftsysem, Behandlungsmittel über das Flugloch dem Bienenvolk zuführt.

Erfindungsgemäß kann dadurch der Behandelnde nicht mit Medikamenten in Berührung kommen.

STAND DER TECHNIK:

Zur Behandlung von Bienenkrankheiten und den Befall von Parasiten sind bisher keine speziellen Behandlungsgeräte bekannt.

NACHTEILE DER VORANGEGANGENEN TECHNIK:

Die bisher medikamentöse Behandlung erfolgte mit großen Arbeitsaufwand, teilweise zum Schaden der Bienenvölker aber auch zum Schaden der Ausführenden Personen.

Durch das zwangsweise in Berührungkommen mit Medikamenten, haben behandelnde Personen, Ätzungen und Atembeschwerten erlitten.

Die Erfindung bezieht sich auf eine Einrichtung zum Behandeln von Bienenvölkern nach den Oberbegriff des Anspruches 1. ("Behandlungsgerät für Bienenkrankheiten")

Die Natur ist nicht immer der Urheber von Leid und der Verworrenheit dieser Welt. Keine Naturkraft ist böse, es hängt viel von den Menschen ab, wie sie die Mächte der Natur einsetzen. Ist es daher aber immer notwendig, mit chemischen Gift den sogenannten Schädlingen zu leibe zurücken ?

Normalerweise besteht ein ausgewogenes Verhältnis zwischen den Gliedern einer Biozönose; Räuber und Beute, Schädling und Nützling halten sich die Waage. Es werden immer wieder Krankheiten auftreten, die wir zu behandeln haben, es werden Krankheiten und Parasiten aus nicht heimatlichökologischen Bereichen auftreten, welche fernzuhalten sind. Zum Beispiel der Varroa-Parasit, eine asiatische Milbe, "Varroa jacobsoni", welche ihre asiatische Heimat verlassen hat, durch die Länder wandert und in unserer Honigbiene Apis mellifica einen guten Wirt gefunden hat.

Um unsere Honigbiene leistungsfähig und am Leben zu erhalten ist eine Behandlung unumgänglich.

Wie kann man aber behandeln ohne Eingriff und Öffnung des Stockes ?

Die Anwendung von Behandlungsstoffen sollte nicht in der Blüte und der aktiven Hochleistungszeit eines Bienenvolkes geschehen, die Brut, der Honig könnte Schaden erleiden. Der Herbst und die Winterzeit würden sich dazu anbieten. Aber da sollten die Bienen warm eingepackt werden und ein Öffnen des Bienenstockes bringt Unruhe und eine Störung des Naturablaufes mit sich. Hieraus ergab sich nach Anspruch 1 die erfindungsgemäße Lösung, ohne Eingriff zu behandeln und zwar durch das Flugloch oder dafür geschaffene Behandlöcher. Mit einer vielzahl von Möglichkeiten, wie Heilmittel. Räucher und Verdampfungsmittel, warm oder kalt.

Mittel, welche zugelassen sind und mühelos, ohne Gefahr dem Bienenvolk zugeführt werden können.

Es kann die Luftfeuchtigkeit erhöht oder abgezogen werden.

Die Behandlung erfolgt indensiv und zwar mit Umluft, um eine volle Durchlüftung wirksam zu erreichen.

Ohne Umluft würde ein Überdruck in Bienenstock entstehen und die Heilmittel würden aus der nächsten Fuge entweichen.

Dadurch, daß ein Bienenvolk stets in der Traube eine Temperatur von 35°C hat und an kälteren Tagen sich die Traube zusammenzieht, wird ein Heilmittel nur die äußeren Bienen erreichen.

Eine Elimination ist daher schwer möglich.

Bei der erfindungsgemäßen Behandlung jedoch wird die Bienentraube aufgelockert, der Bienenstock erwärmt, daher setzt der Naturtrieb der Bienen zum Lüften ein und jetzt erst kann eine Behandlung erfolgen, welche jede Stelle im Volk durchdringt. Die Parasiten können sich bei einer Temperatur von 42 - 45°C nicht mehr auf den Bienen halten und somit erreicht die medikamentöse Anwendung voll ihre Wirkung.

Der Erfindung liegt die Aufgabe zugrunde, der im Oberbegriff des Anspruches 1 genannten Gattung so anzuordnen, daß es auf einfachste Weise wirksam wird.

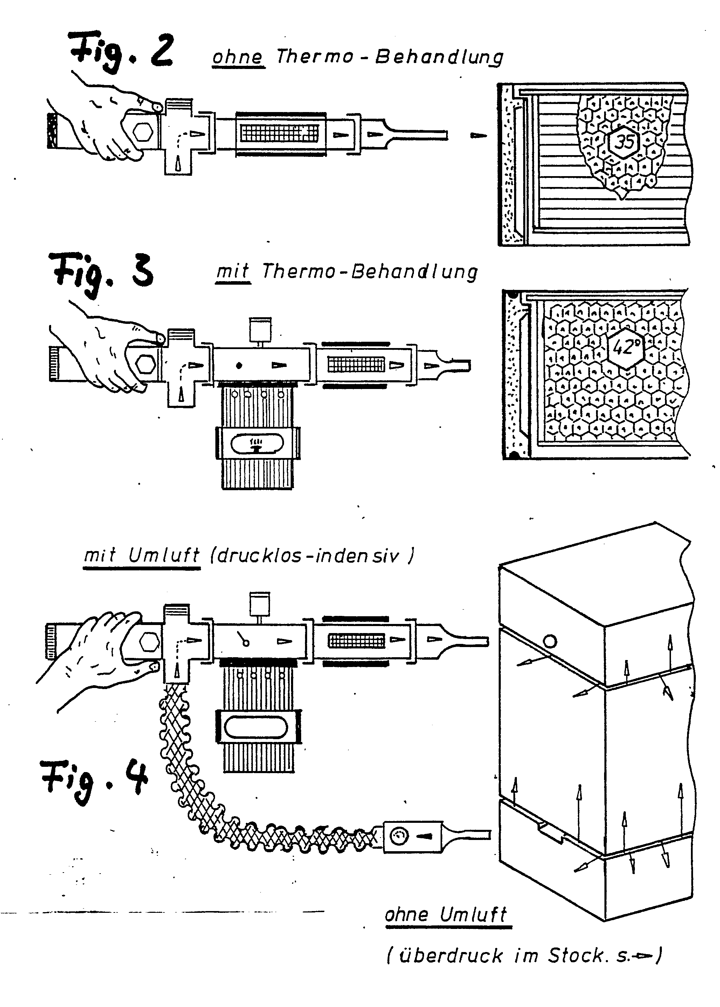

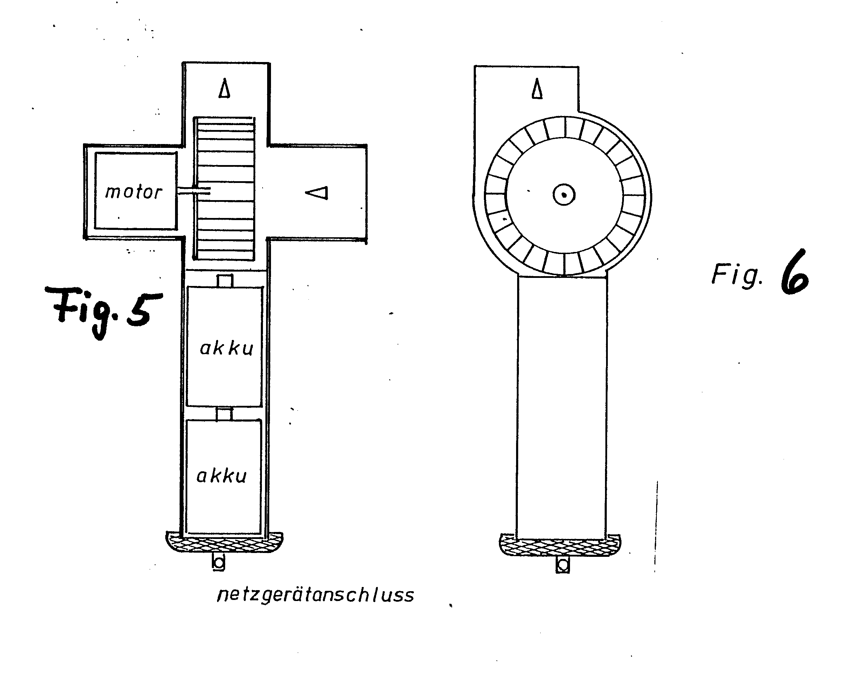

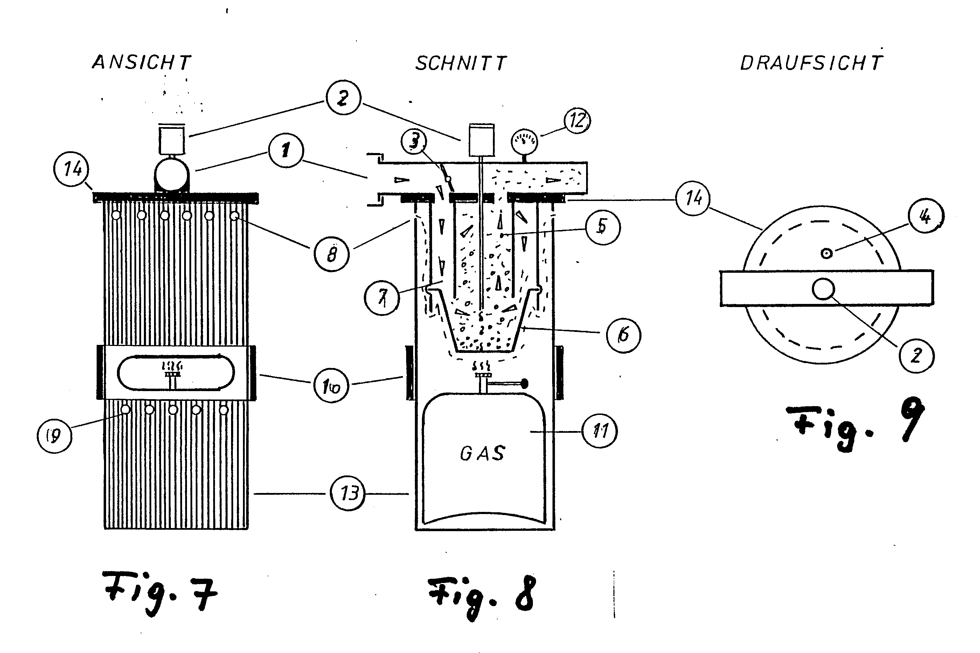

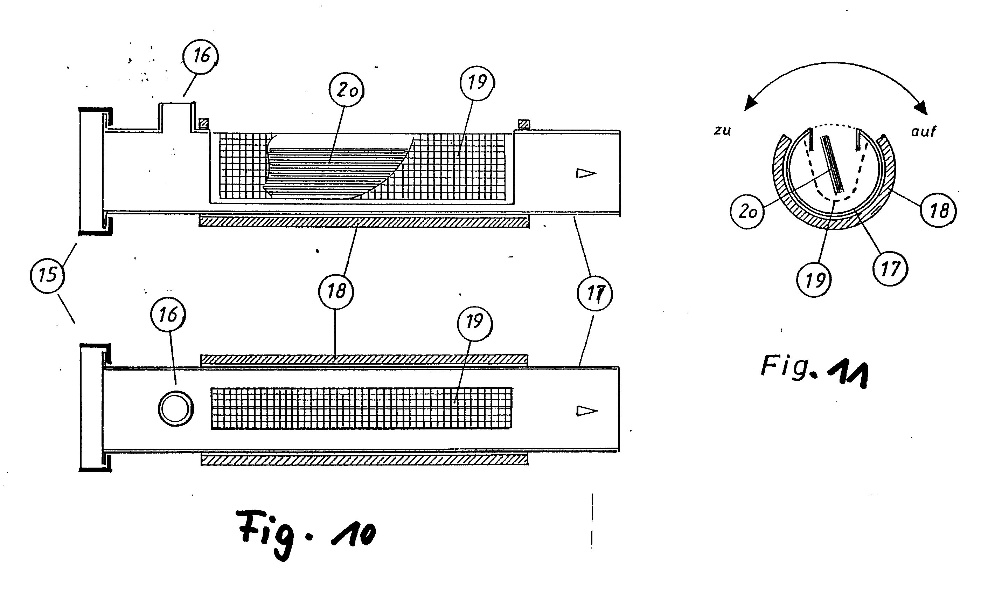

An dem Luftgebläse (Fig. 5 u. 6) wird der Räucher und Vernebler (Fig. 10) angeschlossen, durch drehen des Sichtrohres (18) wird eine Öffnung zum Drahtkäfig (19) freigegeben um einen Räucherstreifen (20) einzulegen. Nach Verschluß der Einlegeöffnung und Anzünden des Räucherstreifens wird über eine Düse (Fig.2) der Rauch in den Bienenstock eingeblasen (ohne Thermo-Behandlung).

Bei einer Thermo-Behandlung (Fig. 3), zur Auflockerung der Bienentraube wird die Luft über eine Lufterwärmerkammer (Fig. 8) (7) in den Verdampfungstopf(6), der Mischkammer (5), nach Aufnahme der Behandlungsmittel, über die Düse den Bienenstock zugeführt. Durch die Dosierdose (Fig. 7 u. 8) (2) können Tropfen oder Mengen in den Verdampfertopf (6) eingegeben werden.

Eine Gasheizung (11) sorgt für die Erwärmung.

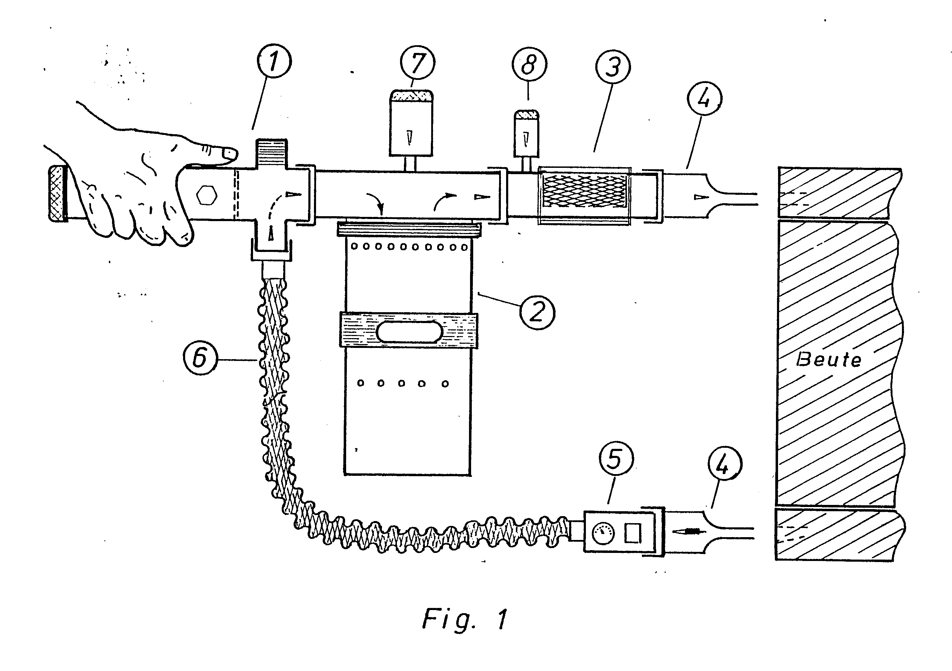

Durch die Umluftanwendung (Fig. 1 u. 4) wird im Bienen-Stock kein Überdruck erzeugt, die Stockluft (Stockgeruch) bleiben in seinem Zustand unverändert, was Wiederum keine Unruhe verursacht.

Die praktische Erfahrung hat gezeigt, daß zur Bekämpfung der Varroatose (Varroa-Milbe) mit Ameisensäure oder Räucherstreifen, eine zeitliche Begrenzung mittels einer Zeitschaltuhr erforderlich ist, um eine wirkungsvolle und geziehlte Behandlung zu erreichen.

Erfindungsgemäß kann eine Wechselwirkung, Warm-Kalt-Warm-Therapie, Zeit-Weg-Temperatur, in der Verhaltensweise sowie den Zustand des Bienenvolkes angewendet werden, um mit Hilfe von Reizstoffen oder Medikamenten die Bienen von den Varroa-Milben zu befreien.

## BEZUGSZEICHEN:

Fig. 1 Geräte-Anordnung: (4) Düse
(5) Meß-u. Filtersystem
(6) Umluftschlauch
(7) Dosierdose
(8) Ampullenaufnahme
Fig. 2,3 u. 4: Anwendung und Einsatz
Fig. 5 u. 6: Luftgebläse
Fig. 7,8 u. 9: (1) Luftkanal
(2) Dosierdose
(3) Luftregler
(4) Thermometeranschluß
(5) Mischkammer

(6) Verdampfungstopf
(7) Lufterwärmungskammer
(8) Abgaskanal
(9) Verbrennungsluft
(10) Sicht-und Zündöffnung
(11) Gasheizung
(12) Thermometer
(13) Gerätemantel
(14) Zentralplatte
Fig. 10 u. 11: (15) Verbindungsrohr
(16) Ampullenanschluß -Dosiereinlauf
(17) Glimmrohr
(18) Sicht und Verschlußrohr
(19) Drahtkäfig
(20) Räucherstreifen

## Ansprüche

1. Dadurch gekennzeichnet, daß das Behandlungsgerät für Bienenvölker erfindungsgemäß eingesetzt wird. Fig. 1

2. Gekennzeichnet nach Anspruch 1, daß das Behandlungsgerät aus mehreren Teilen besteht, welche entsprechend der Diagnose verwendet werden.

3. Dadurch gekennzeichnet, daß ein Niederdruckluftgebläse Fig. 1 (Gleich-oder Wechselstrom), die Luft über die jeweiligen Geräte entsprechend der Krankheit oder der Behandlungsmittel dem Bienenvolk zuführt.

4. Nach Anspruch 1-3 dadurch gekennzeichnet, daß folgende Behandlungsgeräte erfindungsgemäß in Anwendung kommen:

a. Zusatzgerät zum abbrennen oder abglimmen von einen oder mehreren Räucherstreifen. Fig. 10 u. 11

b. Zusatzgerät zum abrauchen und einblasen von Tabak, Tee, Rinde oder andere rauchbare Stoffe. Fig. 2

c. Zusatzgerät zur thermischen Behandlung, aufheizen des Bienenstockes, erhöhen der Luftfeuchtigkeit, verdampfen und aufbereiten von medikamentösen, natur und chemischen Behandlungsmitteln. Fig. 3

5. Nach Anspruch 1-4 dadurch gekennzeichnet, daß die Behandlung erfindungsgemäß mittels eines Verbindungsschlauches mit direkter Umluft betrieben wird. Fig. 4

6. Dadurch gekennzeichnet, daß im Umluftsystem während der Behandlung ein Filter-und Meßvorgang Fig. 1, die Reinigung und den klimatischen Zustand im Bienenstock überwacht und steuert.

7. Dadurch gekennzeichnet, daß mit dem Behandlungsgerät für Bienenvölker, die Behandlung über das Flugloch oder Behandlungsöffnungen erfolgt.

8. Nach Anspruch 1 bis 5 dadurch gekennzeichnet, daß in den erfindungsgemäßen Behandlungsgerät für Bienen,eine Zeitschaltuhr eingebaut werden kann, mit der die Behandlung mit Intervallen oder Impulsen sowie der Zeit vorgenommen werden kann.

9. Nach Anspruch 1 bis 8 dadurch gekennzeichnet, daß mit dieser Erfindung eine Warm-, Kalt-Warmtherapie vorgenommen wird.

Fig. 1

Beute

0 259 506

**Fig. 2**  <u>ohne</u> Thermo - Behandlung

**Fig. 3**  <u>mit</u> Thermo - Behandlung

mit Umluft (drucklos - indensiv )

**Fig. 4**

<u>ohne Umluft</u>

( überdruck im Stock. s. → )

**Fig. 5**

motor

akku

akku

netzgerätanschluss

**Fig. 6**

ANSICHT                    SCHNITT                    DRAUFSICHT

Fig. 7          Fig. 8          Fig. 9

0 259 506

Fig. 10

Fig. 11

zu          auf

0 259 506

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-8 432 467 (SCHLEIF)<br>* Das ganze Dokument *<br><br>--- | 3,7 | A 01 K 51/00<br>A 01 K 55/00 |
| A | DE-A-3 335 808 (SEEGER)<br>* Ansprüche 1,3 *<br><br>--- | 8 | |
| A | EP-A-0 164 629 (BAYER)<br>* Seite 2, Zeilen 8,9 *<br><br>----- | 9 | |

| | |
|---|---|
| | **RECHERCHIERTE SACHGEBIETE (Int. Cl.4)**<br><br>A 01 K |

Der vorliegende Recherchenbericht wurde für alle Patentansprüche erstellt.

| Recherchenort<br>DEN HAAG | Abschlußdatum der Recherche<br>12-05-1987 | Prüfer<br>VILBIG K |
|---|---|---|